# EUROPEAN PATENT APPLICATION

(11) **EP 4 838 365 A1**
(43) Date of publication of application: **11.11.2026**
(21) Application number: 24919718.7
(22) Date of filing: 03.09.2024
(51) Int. Cl.: G06F 11/14

(54) **DATA PROCESSING METHOD AND RELATED APPARATUS**

(30) Priority: 24.01.2024 CN 202410101131
(71) Applicant: Huawei Technologies Co., Ltd., Shenzhen, Guangdong 518129 (CN)
(72) Inventor: WANG, Yu, Shenzhen, Guangdong 518129 (CN); HE, Lei, Shenzhen, Guangdong 518129 (CN); WANG, Shenglong, Shenzhen, Guangdong 518129 (CN)
(74) Representative: Huawei European IPR
(86) International application number: PCT/CN2024/116444
(87) International publication number: WO 2025/156637

(57) **Abstract**

This application provides a data processing method and a related apparatus, which may be applied to a database flashback scenario. The method includes: a first flashback instruction is received; and in response to the first flashback instruction, a first page in a database is recorded into a flashback log before the first page is modified for a first time in a target period. A second flashback instruction is received; and in response to the second flashback instruction, the database is restored to a state at a specified moment based on the flashback log and a redo log of the database. In this application, in the target period, the first page is recorded into the flashback log only before the first page is modified for the first time. In other words, for the first page on which a modification operation is performed, only one initial page is recorded in the target period, and a subsequent modified version in the target period is not recorded, so that disk space overheads can be effectively reduced.

## Description

This application claims priority to Chinese Patent Application No. 202410101131.2, filed with the China National Intellectual Property Administration on January 24, 2024 and entitled "DATA PROCESSING METHOD AND RELATED APPARATUS", which is incorporated herein by reference in its entirety.

### TECHNICAL FIELD

This application relates to the field of computer technologies, and in particular, to a data processing method and a related apparatus.

### BACKGROUND

Database flashback is a database recovery technology that restores a database to a state at a previous moment. The database flashback technology has a wide range of application scenarios and can be used in business processes such as upgrade, fault recovery, and undoing of logical errors. For example, if a flashback function is enabled during preparation for an upgrade of a database, and an error occurs during the upgrade, the flashback function can restore the database to a pre-upgrade state. Currently, a physical backup method is widely used in the industry to achieve an effect similar to database flashback. When a database becomes abnormal, a physical backup is used to rebuild the database. A physical backup essentially involves copying current data in a database and then uses the copied data for recovery. Therefore, a physical backup occupies a large amount of disk space.

To address the foregoing problem, the industry proposes some solutions, for example, implementing a flashback effect via undo (undo) data. Specifically, the solution includes an undo module and a flashback module. During service execution, the undo module is responsible for recording and maintaining undo data in a database. When a flashback command needs to be executed, the flashback module selects corresponding data from the undo data and flashes the database back to a specified moment based on the related data.

The undo data records data changes in the database at each moment. Therefore, the database flashback function can be effectively implemented without a physical backup of the database. However, when services are busy, data changes are substantial, and massive undo data needs to be recorded, consuming a large amount of disk space. In extreme scenarios, disk space occupied by the undo data is even greater than that required for a physical backup.

### SUMMARY

This application provides a data processing method and a related apparatus, which can effectively reduce disk space overheads while implementing a database flashback function.

A first aspect of this application provides a data processing method, which may be applied to a data processing apparatus. The method includes: receiving a first flashback instruction; in response to the first flashback instruction, recording a first page in a database into a flashback log before modifying the first page for a first time in a target period; receiving a second flashback instruction; and in response to the second flashback instruction, restoring the database to a state at a specified moment based on the flashback log and a redo log of the database.

The first flashback instruction is sent when a user chooses to enable a flashback function. After receiving the first flashback instruction, for the first page on which a modification operation is performed, the data processing apparatus records the first page into the flashback log only before the first page is modified for the first time in the target period. In other words, even if the first page is modified for a plurality of times in the target period (generally, the first page is modified for a plurality of times), only one initial page is recorded. If no modification operation is performed on a page in the target period, the page is not processed. The target period may be any specified period of time. For example, the target period is five minutes or one hour. Alternatively, the target period may be a fixed period. For example, the target period is one CKPT period or includes a plurality of CKPT periods.

When the user needs to perform a recovery operation on the database, the user sends the second flashback instruction. The second flashback instruction carries a specified moment to which the database is to be restored. The specified moment may be a time point at which the flashback function is enabled, or may be any time point after the flashback function is enabled. This is not specifically limited herein. After receiving the second flashback instruction, the data processing apparatus performs a flashback operation on the database. Specifically, based on the specified moment carried in the second flashback instruction, a corresponding target page is determined in the first page recorded into the flashback log. For example, if the specified moment is 09:00 a.m., the database needs to be restored to a state at 09:00 a.m. In this case, a target page whose recording time is closest to 9:00 a.m. is located from the flashback log, and a flashback operation is performed based on the target page, to restore data to a state corresponding to the target page. Then, replay is performed based on the redo log (redo log), to restore the database to the state at the specified moment. A recording time of a page closer to the specified moment indicates shorter duration required for performing replay based on the redo log. For an uncommitted transaction, an undo operation is performed by using undo data (undo data).

In the first aspect of this application, in the target period, the first page is recorded into the flashback log only before the first page is modified for the first time. In other words, for the first page on which a modification operation is performed, only one initial page is recorded in the target period, and a subsequent modified version in the target period is not recorded, so that disk space overheads can be effectively reduced. In addition, recording only one initial page in the target period further enables fewer versions of the page to be recorded into the flashback log. In this way, the corresponding target page can be quickly determined, and database flashback duration can be reduced.

In a possible implementation of the first aspect, the target period is a checkpoint (checkpoint, CKPT) period in which the first page is modified for the first time after the first flashback instruction is received. In other words, the first page is recorded only in a first CKPT period in which a modification operation is performed on the first page after the first flashback instruction is received. The first page is an original page following receipt of the first flashback instruction. In other words, even if the first page is modified in a plurality of CKPT periods after the first instruction is received, or is modified for a plurality of times in one CKPT period, the flashback log records only the first page (that is, the original page) before a first modification.

In this possible implementation, only one original page is recorded for a page modified a plurality of times, thereby greatly reducing disk space overheads. In addition, as only an original page is recorded for one page, a process of searching for a page corresponding to a specified moment from a plurality of historical versions can be reduced, and a flashback speed is greatly increased.

In a possible implementation of the first aspect, the target period is a single checkpoint period, and the flashback log includes a plurality of first pages, where each of the first pages corresponds to one checkpoint period. That is, in each CKPT period in which a modification operation is performed on the first page, the first page is recorded into the flashback log before the first page is modified for a first time in the CKPT period. In other words, for each CKPT period in which a modification operation is performed on the first page, an initial page of the first page in this period is recorded into the flashback log. The flashback log includes a plurality of versions of the first page, and each first page corresponds to one CKPT period.

In this possible implementation, for the first page modified for a plurality of times in one CKPT period, the first page is recorded into the flashback log only before a first modification in the CKPT period, that is, only one page is recorded in one CKPT period, thereby reducing disk space overheads. In addition, as one page is recorded in each CKPT period in which a modification operation is performed, a version of the page closer to a time point specified by the user can be located, so that the database can be quickly restored to a state at the specified moment.

In a possible implementation of the first aspect, the target period includes N checkpoint periods, and the flashback log includes a plurality of first pages, where each of the first pages corresponds to the N checkpoint periods, and N is an integer greater than 1. That is, in every N CKPT periods in which a modification operation is performed on the first page, the first page is recorded into the flashback log only before the first page is modified for a first time in the N CKPT periods. In other words, one first page is recorded into the flashback log in every N CKPT periods. The flashback log includes a plurality of versions of the first page, and each first page corresponds to N CKPT periods. For example, if N is 5, only one initial page (that is, the first page itself) is recorded in every five CKPT periods.

In this possible implementation, compared with recording one first page in each CKPT period, recording only one first page in a plurality of CKPT periods can further reduce disk space overheads. Compared with recording only one initial page only in a first CKPT period in which modification is performed, recording one initial page in every N CKPT periods can locate a version of the page that is closer to a time point specified by the user, thereby reducing a replay time.

In a possible implementation of the first aspect, the foregoing step of restoring the database to the state at the specified moment based on the flashback log and the redo log of the database includes: constructing a fast lookup structure in an index structure manner based on the plurality of first pages; determining, based on the fast lookup structure, a target page corresponding to the specified moment in the plurality of first pages; and restoring the database to the state at the specified moment based on the target page and the redo log.

When the target period is a single CKPT period or N CKPT periods, a plurality of versions of the first page may be recorded into the flashback log. For example, when the target period is a single CKPT period, and modification operations are performed on page A in all of 20 CKPT periods, the flashback log records 20 versions of page A. To locate a target page from the 20 versions of the page, in a solution commonly used in the industry, the page is read in sequence until a required version is located. This solution takes a relatively long time.

In this possible implementation, the target page is quickly determined in many versions by constructing the fast lookup structure. Specifically, an index structure is established for many versions recorded into the flashback log. The index structure may be a linked list, a balanced tree (balanced tree, B-tree), or the like. The balanced tree may be a B-tree, a B* tree, or a B+ tree. The index structure may provide an effect similar to a directory, so that a required target page can be quickly determined in a plurality of pages.

In a possible implementation of the first aspect, after the foregoing step of receiving the first flashback instruction, the method further includes: recording a log between a recovery point (recovery point, RCY) and a least recovery point (least recovery point, LRP) in the redo log into the flashback log.

In this possible implementation, the redo log from the RCY point to the LRP point is recorded into the flashback log. In this way, even if the redo log is archived and purged, a replay operation can be performed based on this portion of redo log buffered in the flashback log, thereby ensuring solution stability.

In a possible implementation of the first aspect, the method further includes: modifying the first page to obtain a second page; and flushing the second page to a disk. The second page that has not been flushed to the disk may be referred to as a dirty page, and is placed in a dirty page queue. To perform a flush operation, the second page is extracted from the dirty page queue and written to the disk.

In a possible implementation of the first aspect, the foregoing step of recording the page into the flashback log includes: copying the page to a flashback buffer; and recording the page from the flashback buffer into the flashback log; and before the foregoing step of flushing the second page to the disk, the method further includes: checking whether the first page exists in the flashback buffer; and if the first page exists, writing the first page from the flashback buffer to the flashback log.

To ensure that the database can perform a flashback operation normally, before the second page is flushed to the disk, whether the corresponding first page still exists in the flashback buffer is first checked. If the first page exists, it indicates that the first page is not recorded into the flashback log, and the first page is read from the flashback buffer and written to the flashback log, thereby fully ensuring that the initial page has been recorded into the flashback log.

In a possible implementation of the first aspect, modifying the first page and recording the first page into the flashback log are parallel operations. In other words, flashback log flushing and page modification and flushing are asynchronous mechanisms. Asynchronous operation of a plurality of threads does not block database services, thereby ensuring that database service performance is not degraded.

A second aspect of this application provides a data processing apparatus, including a receiving unit, a recording unit, and a restoration unit. The receiving unit is configured to receive a first flashback instruction; the recording unit is configured to: in response to the first flashback instruction, record a first page in a database into a flashback log before modifying the first page for a first time in a target period; where the receiving unit is further configured to receive a second flashback instruction; and the restoration unit is configured to: in response to the second flashback instruction, restore the database to a state at a specified moment based on the flashback log and a redo log of the database.

In a possible implementation of the second aspect, the target period is a checkpoint period in which the first page is modified for the first time after the first flashback instruction is received.

In a possible implementation of the second aspect, the target period is a single checkpoint period, and the flashback log includes a plurality of first pages, where each of the first pages corresponds to one checkpoint period.

In a possible implementation of the second aspect, the target period includes N checkpoint periods, and the flashback log includes a plurality of first pages, where each of the first pages corresponds to the N checkpoint periods, and N is an integer greater than 1.

In a possible implementation of the second aspect, the restoration unit is specifically configured to: construct a fast lookup structure in an index structure manner based on the plurality of first pages; determine, based on the fast lookup structure, a target page corresponding to the specified moment in the plurality of first pages; and restore the database to the state at the specified moment based on the target page and the redo log.

In a possible implementation of the second aspect, the recording unit is further configured to: record a log between a recovery point and a least recovery point in the redo log into the flashback log.

In a possible implementation of the second aspect, the apparatus further includes: a modification unit, configured to modify the first page to obtain a second page; and a flush unit, configured to flush the second page to a disk.

In a possible implementation of the second aspect, the recording unit is specifically configured to: copy the page to a flashback buffer; and record the page from the flashback buffer into the flashback log; and the apparatus further includes: a check unit, configured to check whether the first page exists in the flashback buffer; and a write unit, configured to: if the first page exists, write the first page from the flashback buffer to the flashback log.

In a possible implementation of the second aspect, modifying the first page and recording the first page into the flashback log are parallel operations.

The data processing apparatus provided in the second aspect of this application is configured to perform the method according to the first aspect or any possible implementation of the first aspect.

A third aspect of this application provides a data transmission apparatus, including a processor and a memory. The memory is configured to store instructions. The processor is configured to obtain the instructions stored in the memory, to perform the method according to the first aspect or any possible implementation of the first aspect.

A fourth aspect of this application provides a computer-readable storage medium. The computer-readable storage medium includes instructions. When the instructions are run on a computer, the computer is enabled to perform the method according to the first aspect or any possible implementation of the first aspect.

A fifth aspect of this application provides a computer program product including instructions. When the computer program product runs on a computer, the computer is enabled to perform the method according to the first aspect or any possible implementation of the first aspect.

A sixth aspect of this application provides a chip system. The chip system includes at least one processor and a communication interface. The communication interface and the at least one processor are interconnected through a line, and the at least one processor is configured to run a computer program or instructions, to perform the method according to the first aspect or any possible implementation of the first aspect.

### BRIEF DESCRIPTION OF DRAWINGS

FIG. 1 is a diagram of an architecture of a database system to which an embodiment of this application is applied;
FIG. 2 is a diagram of an embodiment of a data processing method according to an embodiment of this application;
FIG. 3 is a diagram of another embodiment of a data processing method according to an embodiment of this application;
FIG. 4 is a diagram of an embodiment of enabling flashback point-based flashback according to an embodiment of this application;
FIG. 5 is a diagram of an embodiment of enabling time point-based flashback according to an embodiment of this application;
FIG. 6 is a diagram of an embodiment of a data processing method in a database upgrade scenario according to an embodiment of this application;
FIG. 7 is a diagram of another architecture of a database system to which an embodiment of this application is applied;
FIG. 8 is a diagram of an embodiment of a data processing method in a misoperation recovery scenario according to an embodiment of this application;
FIG. 9 is a diagram of a structure of a data processing apparatus according to an embodiment of this application; and
FIG. 10 is a diagram of another data processing apparatus according to an embodiment of this application.

### DESCRIPTION OF EMBODIMENTS

Embodiments of this application provide a data processing method, which can effectively reduce disk space overheads while implementing a database flashback function, and reduce a time required for flashback. An embodiment of this application further provides a related apparatus, a computer-readable storage medium, a computer program product, and the like. Descriptions are provided below separately.

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "system" and "network", "redo log" and "redo log", "undo data" and "undo data", and the like may be used interchangeably. Unless otherwise specified, ordinal numbers such as "first" and "second" are used to distinguish between a plurality of objects, and are not intended to limit a sequence, a time sequence, priorities, or importance of the plurality of objects. It should be understood that the terms used in such a way are interchangeable in proper circumstances, so that embodiments described herein can be implemented in other sequences than the content illustrated or described herein. In addition, the terms "include" and "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes related terms and concepts mainly used in embodiments of this application.

### 1. Checkpoint

A checkpoint (checkpoint, CKPT) is a database event. After a modification operation is performed in a CKPT period, a dirty page is added to a dirty page queue. Subsequently, the dirty page is extracted from the dirty page queue and written to a disk.

### 2. Database flashback technology

The database flashback technology is a full database flashback technology that can restore a database to a specific time point or a specific transaction end point. By using the database flashback technology, a misoperation on the database can be undone or the database can be restored to a previous state.

### 3. Page

A page is a minimum unit for managing data in a storage engine. All data inserted into a database exists on pages.

### 4. Recovery point

A recovery point (recovery point, RCY) is a log point in a database. All changes made before the log point have been applied to the database. Changes made after the log point need to be redone by using a recovery operation. The recovery point is usually used for database backup and recovery operations. During recovery, replay starts from the RCY point.

### 5. Least recovery point

The least recovery point (least recovery point, LRP) is a log point in a database. When all redo logs before the log point have been replayed, the database is restored to a consistent state. The least recovery point is usually used for database fault recovery and transaction rollback operations.

### 6. X lock

An exclusive lock (exclusive lock, X lock) is a database locking mechanism. The X lock has the following characteristics: exclusivity, write operations, and blocking. For exclusivity, after a transaction obtains an X lock, other transactions cannot obtain an X lock or an S lock at the same time. This means that only one transaction can perform a write operation on a locked resource, and another transaction has to wait for the transaction to release the lock. For write operations, a transaction that obtains an X lock can perform read and modification operations on a locked resource. For blocking, if a transaction is holding an X lock and another transaction requests to obtain an X lock or an S lock, the transaction requesting the lock is blocked until the transaction holding the lock releases the lock. Application scenarios of the X lock include a modification operation scenario and a data consistency scenario. For the modification operation scenario, when a transaction needs to modify a resource, the transaction needs to obtain an X lock to ensure that another transaction cannot modify the resource at the same time. For the data consistency scenario, by obtaining an X lock, it can be ensured that another transaction cannot read inconsistent data during a modification operation.

### 7. Balanced tree

Balanced tree (balanced tree, B-tree), also called B-tree, is a self-balancing tree that can keep data in order. This data structure enables actions of data lookup, sequential access, data insertion, and deletion to be completed within logarithmic time. Generally speaking, a B-tree is a generalized binary search tree (binary search tree) and may have more than two subnodes. Different from a self-balancing binary lookup tree, a B-tree optimizes read and write operations on large blocks of system data. The B-tree reduces intermediate processes involved in locating records, thereby increasing an access speed.

Database flashback is a database recovery technology that restores a database to a state at a previous moment. Currently, a physical backup method is widely used in the industry to achieve an effect similar to database flashback. A physical backup copies current data in a database. When flashback is needed, the copied data is used to rebuild the database. As physical backup copies all data in a database at a current moment, a large amount of disk space needs to be occupied, and recovery takes a same amount of time. In addition, the database can only be restored to a state at a moment when the physical backup is created (new data generated after the backup is not recorded).

To address the foregoing problem, the industry proposes some solutions, for example, implementing database flashback by using undo data (undo data), and implementing flashback in a manner combining a physical backup with point-in-time recovery (point in time recover, PITR). The solution of implementing flashback by using undo data includes an undo module and a flashback module. During service execution, the undo module is responsible for recording undo data in a database. When a flashback command needs to be executed, the flashback module selects corresponding data from the undo data and flashes the database back to a specified moment based on the related data. As the undo data records data changes at each moment in the database, a flashback function can be effectively implemented, and the database can be restored to any time point for which undo data is recorded. However, when services are busy, data changes are substantial, and massive undo data needs to be recorded, occupying a large amount of disk space. In addition, one page usually has a plurality of historical versions. Selecting a page of a corresponding moment from the many historical pages consumes a relatively large amount of time, and consequently, flashback takes a relatively long time.

Implementing flashback by combining a physical backup with PITR is an enhanced implementation of physical backup. Specifically, data at a current moment is first backed up through physical backup, and then redo logs are continuously recorded into a log file. When a flashback command is executed, the database is rebuilt based on the backup data to restore data to a backup moment. Then, replay is performed by using the recorded logs to restore the database to a specified moment. This solution can implement flashback to any time point. However, as physical backup is also required, this solution cannot resolve problems of high space overheads and long backup and recovery duration.

In view of this, an embodiment of this application provides a data processing method, where a page in a database is recorded only before the page is modified for a first time in a target period, the database can be flashed back to a state before the first modification by using the recorded page, and then replay is performed in conjunction with a redo log (redo log), thereby restoring the database to a state at a specified moment. In other words, even if the page is modified for a plurality of times in the target period, only an initial page of the page in the target period is recorded. A page that is not modified in the target period does not need to be recorded, thereby implementing a database flashback function by using very low disk space overheads. In addition, as only one page is recorded in the target period, a required page can be quickly determined during flashback. In this way, database flashback duration can be reduced, and flashback efficiency can be improved.

It may be understood that the data processing method provided in this embodiment of this application may be applied to various databases, for example, MySQL, Oracle, and SQL Server. For ease of description, MySQL is used as an example for description in this embodiment of this application. This is not specifically limited.

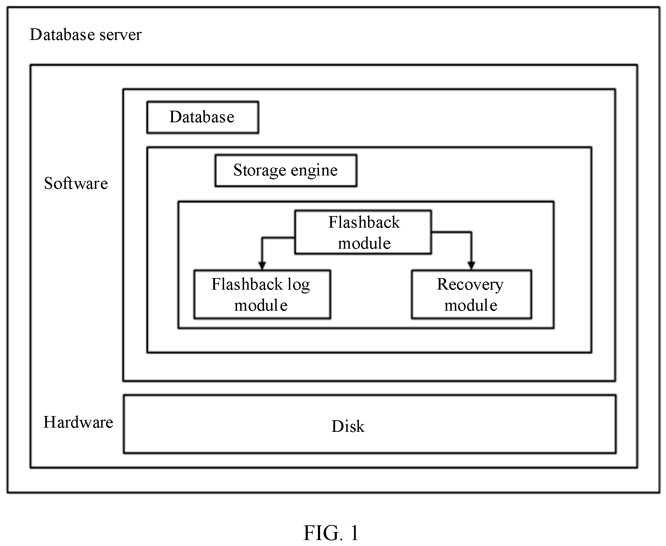

FIG. 1 is a diagram of an architecture of a database system to which an embodiment of this application is applied.

As shown in FIG. 1, the database system is deployed in a database server, and specifically includes a software portion and a hardware portion. The hardware portion is a disk, which is a physical medium for storing data in a database. The software portion is database platform software, which is configured to manage data files on the disk, including operations such as reading, writing, updating, and deleting data. The database platform software includes a storage engine, and program code used to implement this embodiment of this application exists in the storage engine. The storage engine includes a flashback module, and the flashback module is configured to implement a database flashback function. Specifically, the flashback module may be further divided into a flashback log submodule and a flashback recovery submodule. After the flashback function is enabled, for a page that is modified for a first time in a target period, the flashback log submodule records, into a flashback log, an initial page (that is, a page before the first modification) corresponding to the page in the target period. When a flashback instruction is executed, the flashback recovery submodule performs a flashback operation on the database based on the initial page recorded into the flashback log.

It should be noted that the target period may be any specified period of time. For example, the target period is five minutes or one hour. Alternatively, the target period may be a fixed period. For example, the target period is one CKPT period or includes a plurality of CKPT periods. To make the solution clearer, an example in which the target period is one CKPT period or includes a plurality of CKPT periods is used for description in this embodiment of this application. This is not specifically limited.

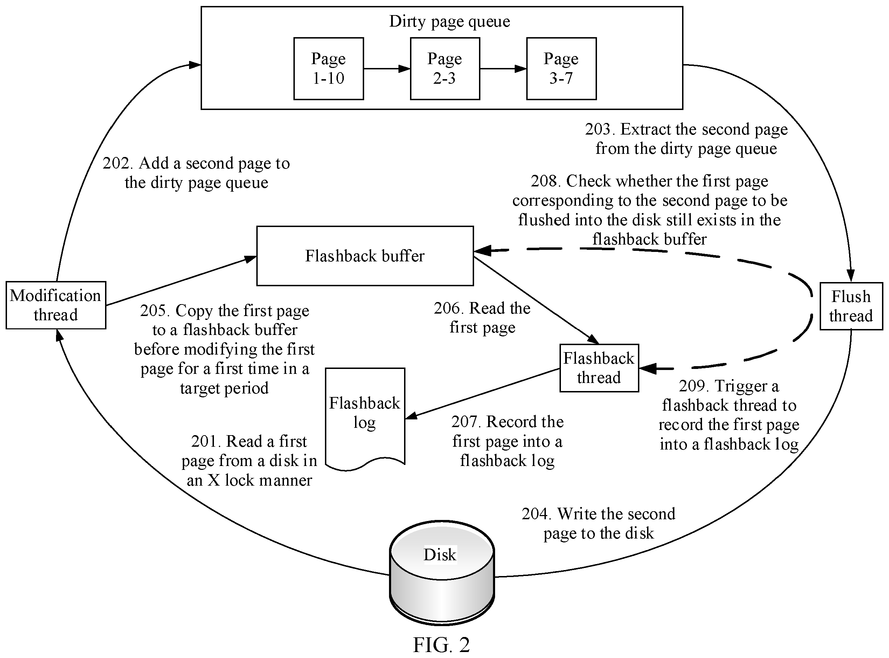

Based on the system architecture shown in FIG. 1, the following describes an overall procedure of this embodiment of this application with reference to FIG. 2. As shown in FIG. 2, the overall procedure includes a page modification thread, a dirty page flushing thread, and a flashback thread for recording an initial page. Optionally, the dirty page flushing thread may be further used to ensure that the initial page has been recorded into the flashback log. Step 201 and step 202 are service logic of the modification thread, step 203 and step 204 are service logic of the flushing thread for flushing a dirty page, step 205 to step 207 are service logic of the flashback thread, and step 208 and step 209 are service logic of the flushing thread for ensuring that the initial page has been recorded into the flashback log. Flushing is to write data into a disk. A process from page modification to flushing is one CKPT period, to be specific, step 201 to step 204 are one CKPT period. It should be understood that many pages are usually modified and flushed to a disk in one CKPT period, and one page may be modified for a plurality of times. The following describes steps separately.

201. The modification thread reads a first page from a disk in an X lock manner. A transaction that obtains an X lock can perform read and modification operations on a locked resource, and can ensure that another transaction cannot modify the page at the same time. A transaction is a complete logical process that composed of a series of database operations.

202. The modification thread modifies the first page to obtain a second page. A modified page that has not been flushed to a disk may be referred to as a dirty page. A page is not immediately flushed to a disk after being modified. Instead, it is flushed to a disk at an end of a CKPT period. The modified page is first buffered in a dirty page queue. The dirty page queue usually contains a plurality of dirty pages. For example, in FIG. 2, the dirty page queue includes a page (page) 1-10, a page 2-3, and a page 3-7. The page 1-10 is a tenth page of a file 1, the page 2-3 is a third page of a file 2, and the page 3-7 is a seventh page of a file 3.

After the first page is modified to obtain the second page, the modification thread adds the second page to the dirty page queue.

203. The flushing thread extracts the second page from the dirty page queue, to flush the dirty page to the disk.

204. The flushing thread writes the second page to the disk.

205. The flashback thread copies the first page to a flashback buffer before the first page is modified for a first time in a target period. The flashback thread does not perform processing for subsequent modification to the first page in the target period. In other words, for a plurality of modifications on the first page in the target period, the flashback thread records only a page before a first modification (that is, an initial page in the target period). For example, if page B is modified three times, a flashback log copies only an initial page of page B in the target period to the flashback buffer.

The target period may be one CKPT period, or may include a plurality of CKPT periods, for example, two CKPT periods or five CKPT periods. To be specific, the flashback log records the first page only before the first page is modified for a first time in one CKPT period; or the flashback log records the first page only before the first page is modified for a first time in a plurality of CKPT periods. It is assumed that the first page is modified in each CKPT period. When the target period is one CKPT period, one first page is recorded in each CKPT period. In this case, the recorded first page is an initial page of the first page in each CKPT period, and five pages are recorded in five CKPT periods. When the target period is a plurality of (for example, five) CKPT periods, only one first page is recorded in five CKPT periods. In this case, the recorded first page is an initial page of the first page in a first CKPT period. Therefore, compared with a target period of a single CKPT period, a target period of a plurality of CKPT periods can further reduce disk space overheads, but usually needs more time for replay based on a redo log.

It may be understood that step 205 and step 202 may be performed at the same time. In other words, a modification operation of the first page and a copy operation of the first page are asynchronous mechanisms, and the modification thread and the flashback thread may perform these operations in parallel.

206. The flashback thread reads the first page from the flashback buffer. After the first page is read, the first page no longer exists in the flashback buffer.

207. The flashback thread records the first page into the flashback log. The flashback log and the redo log are both stored on the disk.

208. The flushing thread checks whether a corresponding initial page (that is, the first page) of a dirty page (that is, the second page) to be flushed to the disk exists in the flashback buffer. Generally, a CKPT period is relatively long. When the second page needs to be flushed to the disk, the first page in the flashback buffer has already been recorded into the flashback log by the flashback thread. However, it is also possible that the first page has not been flushed to the disk. In view of this, before flushing the second page to the disk (that is, step 204), the flushing thread first checks whether the first page corresponding to the second page still exists in the flashback buffer. If the first page does not exist, it indicates that the first page has been recorded into the flashback log, and step 204 is performed. If the first page exists, step 209 is performed.

209. The flushing thread triggers the flashback thread to record the first page into the flashback log (that is, step 206 and step 207). After the flashback thread performs the recording of the first page into the flashback log, the flushing thread continues to perform step 204. In this way, it can be fully ensured that the initial page is recorded into the flashback log, thereby ensuring normal implementation of the database flashback function.

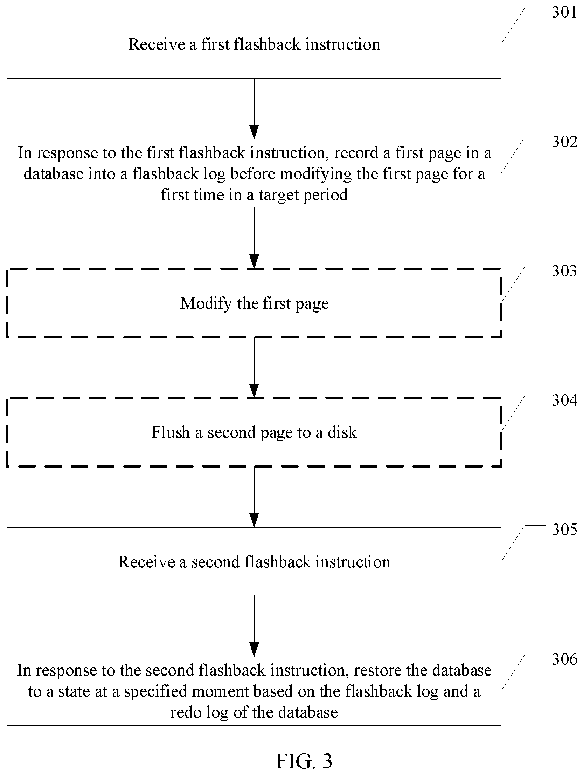

With reference to the overall flowchart shown in FIG. 2, FIG. 3 is a diagram of an embodiment of a data processing method according to an embodiment of this application. As shown in FIG. 3, this embodiment includes steps 301 to 306.

301. Receive a first flashback instruction.

The first flashback instruction is sent when a user chooses to enable a flashback function.

302. In response to the first flashback instruction, record a first page in a database into a flashback log before modifying the first page for a first time in a target period.

After receiving the first flashback instruction, a data processing apparatus records, via a flashback thread, a pre-modification version of a page (that is, a page read by using an X lock) on which a modification operation needs to be performed. Specifically, in the target period, the first page on which a modification operation is to be performed is recorded into the flashback log only before the first page is modified for the first time. In other words, even if the first page is modified for a plurality of times in the target period, only one initial page is recorded. If no modification operation is performed on a page in the target period, the page is not processed. It should be noted that a specific process of recording the first page is as follows: first copying the first page to a flashback buffer, then reading the first page from the flashback buffer, and recording the first page into the flashback log. After the first page is read from the flashback buffer, the first page no longer exists in the flashback buffer.

In a possible solution, the target period is a CKPT period in which the first page is modified for the first time after the first flashback instruction is received. In other words, the first page in this case is an original page obtained after the first flashback instruction is received. This possible solution may be applicable to a scenario in which the database needs to be restored to a moment when flashback is enabled. For example, the user sends the first instruction before a system upgrade. If an error occurs during the system upgrade, the database can be quickly restored to a state prior to the system upgrade by using an original page prior to the system upgrade that is recorded into the flashback log.

In another possible solution, the target period is a single CKPT period. That is, in each CKPT period in which a modification operation is performed on the first page, the first page is recorded into the flashback log before the first page is modified for a first time in the CKPT period. In other words, for each CKPT period in which a modification operation is performed on the first page, an initial page of the first page in this period is recorded into the flashback log. The flashback log includes a plurality of versions of the first page, and each first page corresponds to one CKPT period. In this possible solution, the flashback log records the initial page of the first page in each CKPT period, so that a page that is used to recover the database and that is closer to a time point specified by the user can be located, and the database can be quickly restored to a state at the specified moment.

In another possible solution, the target period includes N CKPT periods, and N is an integer greater than 1. That is, in every N CKPT periods in which a modification operation is performed on the first page, the first page is recorded into the flashback log only before the first page is modified for a first time in the N CKPT periods. In other words, one first page is recorded into the flashback log in every N CKPT periods. The flashback log includes a plurality of versions of the first page, and each first page corresponds to N CKPT periods. For example, if N is 5, only one initial page (that is, the first page itself) is recorded in every five CKPT periods. Compared with recording one first page in each CKPT period, recording one first page in a plurality of CKPT periods can further reduce disk space overheads. However, consequently, the first page recorded into the flashback log may be relatively far away from a time point specified by the user, and therefore, a longer time is required for database recovery.

It may be understood that, during running of the flashback function, the user may also adjust a value of N. For example, the user sets N to 3 when enabling the flashback function, to be specific, one first page is recorded every three CKPT periods. During running of the flashback function, N may be adjusted to 5, to be specific, one first page is recorded every five CKPT periods. Alternatively, such adjustment may also be combined with the solution in which the target period is a single CKPT period. For example, a database flashback operation is more likely to be performed when the flashback function is just enabled. In this case, one initial page is recorded in each of this part of CKPT periods. In subsequent CKPT periods, one initial page is recorded every N CKPT periods, thereby increasing a database recovery speed and reducing disk space occupancy.

303. Modify the first page to obtain a second page.

After the first page is read from the disk by using the X lock, the first page is modified to obtain the second page. A modified page that has not been flushed to a disk may be referred to as a dirty page. A page is not immediately flushed to a disk after being modified. Instead, it is flushed to a disk at an end of a CKPT period. The modified page is first buffered in a dirty page queue. The dirty page queue usually contains a plurality of dirty pages.

After the first page is modified to obtain the second page, the second page is added to the dirty page queue.

304. Flush the second page to a disk.

To perform flushing, the second page is extracted from the dirty page queue and written to the disk.

Optionally, to ensure that the database can perform a flashback operation normally, before the second page is flushed to the disk, whether the corresponding first page still exists in the flashback buffer is first checked. If the first page exists, it indicates that the first page is not recorded into the flashback log, and the data processing apparatus executes the flashback thread to read the first page from the flashback buffer and write the first page to the flashback log, thereby fully ensuring that the initial page has been recorded into the flashback log.

It should be noted that modifying the first page and recording the first page into the flashback log may be performed in parallel. To be specific, an asynchronous mechanism is implemented between step 303 and step 304 (that is, page modification and flushing) and step 301 and step 302 (that is, flashback log flushing). Asynchronous operation of a plurality of threads does not block database services, thereby ensuring that database service performance is not degraded.

305. Receive a second flashback instruction.

After the flashback function is enabled, the user sends the second flashback instruction when database recovery is needed. The second flashback instruction carries a time point to which the database is to be restored.

306. In response to the second flashback instruction, restore the database to a state at a specified moment based on the flashback log and a redo log of the database.

After receiving the second flashback instruction, the data processing apparatus performs a flashback operation on the database. Specifically, based on the specified moment carried in the second flashback instruction, a corresponding target page is determined in the flashback log. For example, if the specified moment is 09:00 a.m., the database needs to be restored to a state at 09:00 a.m. In this case, a target page whose recording time is closest to 9:00 a.m. is located from the flashback log, and a flashback operation is performed based on the target page, to restore data to a state corresponding to the target page. Then, replay is performed based on the redo log, to restore the database to a state at the specified moment. A recording time of a page closer to the specified moment indicates shorter duration required for performing replay based on the redo log. It should be noted that, in this embodiment of this application, if there is an uncommitted transaction during the flashback operation, an undo operation further needs to be performed by using undo data.

It should be understood that a page that needs to be recovered is many pages on which a modification operation is performed before the specified moment, and a target page is a version, of each of the many pages, that is closest to the specified moment.

Optionally, when the target period is a single CKPT period or N CKPT periods, a plurality of versions of the first page may be recorded into the flashback log. For example, when the target period is a single CKPT period, and modification operations are performed on page A in all of 20 CKPT periods, the flashback log records 20 versions of page A. To locate a target page from the 20 versions of the page, in a solution commonly used in the industry, the page is read in sequence until a required version is located. This solution takes a relatively long time.

To quickly determine the target page in the many versions, this embodiment provides a fast lookup structure. Specifically, an index structure is established for a plurality of versions of one page. The index structure may be a linked list, a balanced tree, or the like. The balanced tree may be a B-tree, a B* tree, or a B+ tree. The index structure may provide an effect similar to a directory, so that a required target page can be quickly determined in a plurality of pages.

Optionally, to ensure database consistency, a redo log from an RCY point to an LRP point is recorded into the flashback log. In this way, even if the redo log is archived and purged, a replay operation can be performed based on this portion of redo log buffered in the flashback log, thereby ensuring solution stability.

It may be understood that step 305 and step 306 may occur before step 304, that is, flashback is performed based on the flashback log before the modified page is written to the disk, and step 304 does not need to be performed after the flashback to flush the dirty page in the CKPT period to the disk.

In this embodiment, in the target period, the first page is recorded into the flashback log only before the first page is modified for the first time. The database may be flashed back to a state of the page before the page is modified for the first time in the target period. Then, replay is performed based on the redo log, to quickly restore the database to the state at the specified moment. As only one initial page of a page on which a modification operation is performed is recorded in the target period, disk space overheads can be greatly reduced. In addition, recording only one initial page in the target period further enables fewer historical versions of the page to be recorded into the flashback log. In this way, the required target page can be quickly determined, and a database flashback rate can be increased. In addition, in this embodiment, a fast lookup structure is constructed by using a linked list or a balanced tree. This can further increase a speed of searching for a target page, thereby further improving database flashback efficiency. In addition, recording the first page into the flashback log and modifying the first page may be performed in parallel, so as to ensure that database service performance is not degraded.

It can be learned from the embodiment shown in FIG. 3 that, when the target period is a CKPT period in which the first page is modified for the first time after the first flashback instruction is received, the database may be flashed back to a moment when the flashback function is enabled. When the target period is a single CKPT period or a plurality of CKPT periods, the database may be flashed back to any specified moment. Therefore, the flashback function in this embodiment of this application may be classified into two types, in other words, two interfaces are provided for the flashback function in this embodiment of this application. One is flashback point-based flashback. With this function, the database may be restored to a state at a moment when the flashback function is enabled (that is, a moment when the user sends the first instruction), and only an initial page in a first CKPT period in which a modification operation is performed needs to be recorded, thereby greatly reducing disk space occupancy. The other is time point-based flashback. With this function, the database can be quickly restored to a state at any time point after a flashback moment is enabled. It can be understood that the flashback point-based flashback function may also be used to restore the database to a state at any time point. To be specific, after the database is flashed back to the moment when the flashback function is enabled, replay is performed based on the redo log. However, this takes a long time. Moreover, the time point-based flashback function may also be used to restore the database to a state at a flashback function enabling point. To be specific, a page (that is, an original page) recorded into the flashback log after the flashback function is enabled and existing before the first modification of the first page is located, and then the database is restored to a state before the first modification based on the original page. The state before the first modification is the state at the flashback function enabling point. Although the flashback point-based flashback function can also be implemented by using time point-based flashback, in a scenario in which the database only needs to be restored to the flashback function enabling point, extra disk space overheads are caused, and more time is consumed. The flashback point-based flashback function is applicable to a database upgrade scenario, and the time segment-based flashback function is applicable to an external attack scenario or a misoperation recovery scenario. In this embodiment of this application, functions of the two interfaces are not specifically limited.

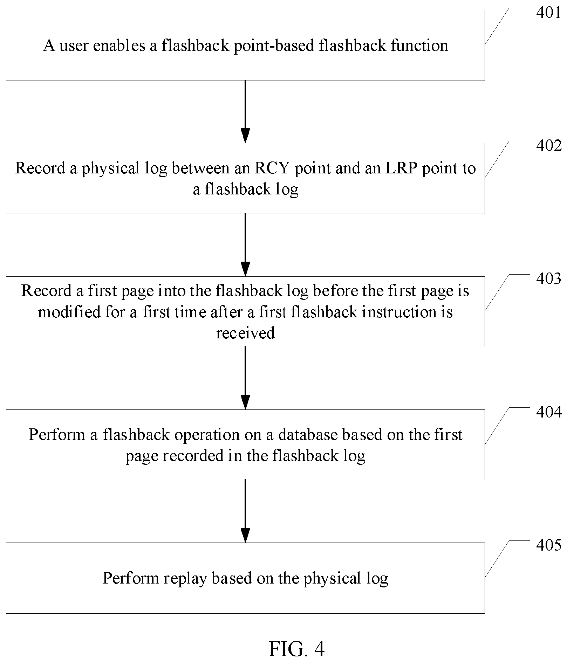

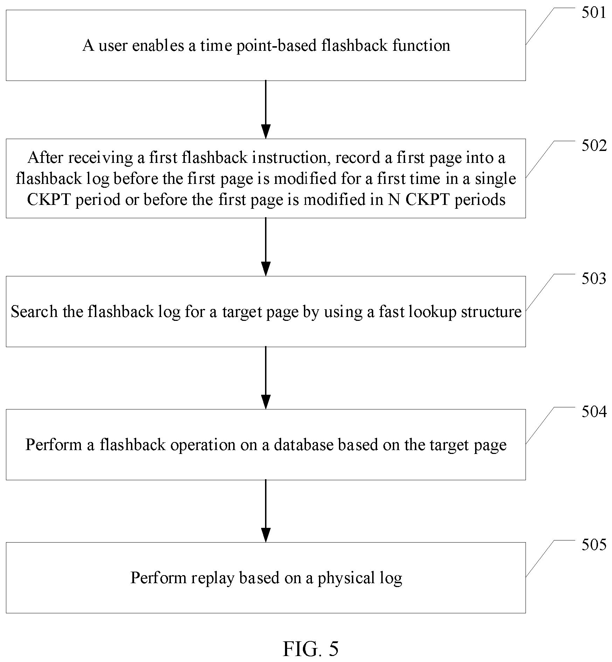

The following describes the two interfaces with reference to FIG. 4 and FIG. 5. FIG. 4 is a diagram of an embodiment of the flashback point-based flashback function. As shown in FIG. 4, this embodiment includes steps 401 to 405.

401. A user sends a first flashback instruction to enable the flashback point-based flashback function.

402. After receiving the first flashback instruction, a data processing apparatus records a redo log between an RCY point and an LRP point into a flashback log. In this way, even if the redo log is archived and purged, a replay operation can be performed based on this portion of redo log buffered in the flashback log, thereby ensuring solution stability.

403. Record a first page into the flashback log before the first page is modified for a first time after the first flashback instruction is received. That is, for a page on which a modification operation is performed, only one original page is recorded into the flashback log.

404. The user sends a second flashback instruction; and in response to the second flashback instruction, the data processing apparatus flashes, based on the first page recorded into the flashback log, the page in the database back to a state before the first modification.

405. Perform replay based on a related redo log subsequently, so that the database achieves a consistent state. The related redo log may be read from the flashback log or read from the redo log. An uncommitted transaction is undone by using undo data.

In this embodiment, only one original page is recorded for a page modified a plurality of times, thereby greatly reducing space overheads. In a scenario in which a large database is frequently modified, compared with the foregoing solution of implementing the database flashback function based on undo data, this embodiment can save more than 90% of space. Compared with the foregoing solution of combining physical backup with PITR, this embodiment can save more than 99% of space.

In addition, in this embodiment, only one original version is recorded for one page, and no historical page needs to be constructed. The recorded original page is the target page. This reduces a process of determining the target page in a plurality of historical versions and greatly increases a flashback speed. Compared with the foregoing two solutions (that is, flashback based on undo data and flashback based on a combination of physical backup and PITR), this embodiment can save more than 90% of time.

FIG. 5 is a diagram of an embodiment of the time point-based flashback function. As shown in FIG. 5, this embodiment includes steps 501 to 505.

501. A user sends a first flashback instruction to enable the time point-based flashback function.

502. After receiving the first flashback instruction, record a first page into a flashback log before the first page is modified for a first time in a single CKPT period or before the first page is modified in N CKPT periods. In other words, one initial page is recorded in each CKPT period in which a modification operation is performed on the first page after the first flashback instruction is received, or one initial page is recorded in every N CKPT periods in which a modification operation is performed on the first page.

503. It can be learned from step 502 that, for the first page, a plurality of different versions are recorded, which respectively correspond to different CKPT periods. To quickly locate a target page corresponding to a moment specified by the user, a fast lookup structure is constructed by using a linked list or a balanced tree. The linked list or the balanced tree may include a plurality of versions of one page, and the linked list or the balanced tree may provide a function similar to a directory, so that a target page can be quickly determined in the plurality of versions.

504. The user sends a second flashback instruction; and in response to the second flashback instruction, a data processing apparatus flashes the page in the database back to a state of the target page.

505. Perform replay based on a redo log subsequently, so that the database achieves a consistent state. An uncommitted transaction is undone by using undo data.

In this embodiment, regardless of how many times the first page is modified in each CKPT period or every N CKPT periods, only one initial page is recorded in each CKPT period or every N CKPT periods, thereby effectively reducing space overheads. In a scenario in which a large database is frequently modified, compared with the foregoing solution of implementing the database flashback function based on undo data, this embodiment can save more than 50% of space. Compared with the foregoing solution of combining physical backup with PITR, this embodiment can save more than 99% of space.

Recording one initial page in each CKPT period or every N CKPT periods also greatly reduces a quantity of versions of a page, thereby reducing flashback duration. In addition, in this embodiment, the fast lookup structure is further constructed, so that a flashback speed can be further increased. Compared with the foregoing two solutions (that is, flashback based on undo data and flashback based on a combination of physical backup and PITR), this embodiment saves more than 90% of time.

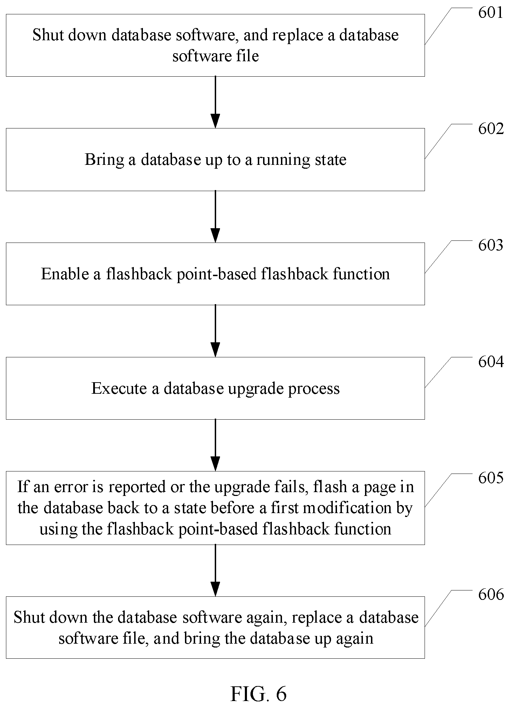

With reference to the foregoing content, the following describes typical application scenarios of this embodiment of this application. FIG. 6 shows an application of the flashback point-based flashback function in an offline database upgrade scenario. In this scenario, if a database upgrade fails, a database can be quickly restored to a pre-upgrade state. The embodiment shown in FIG. 6 may be applied to the system architecture shown in FIG. 1. As shown in FIG. 6, the embodiment includes steps 601 to 606.

601. Shut down database software, and replace a database software file (binary replacement).

602. Bring the database up to a running state.

603. Send a first flashback instruction to enable the flashback point-based flashback function.

604. Execute a database upgrade process to complete the upgrade.

605. If an error is reported or the upgrade fails during execution of the upgrade process, flash a page in the database back to a state before a first modification by using the flashback point-based flashback function.

606. Shut down the database software again, replace a database software file (binary replacement with an old version), and bring the database up again.

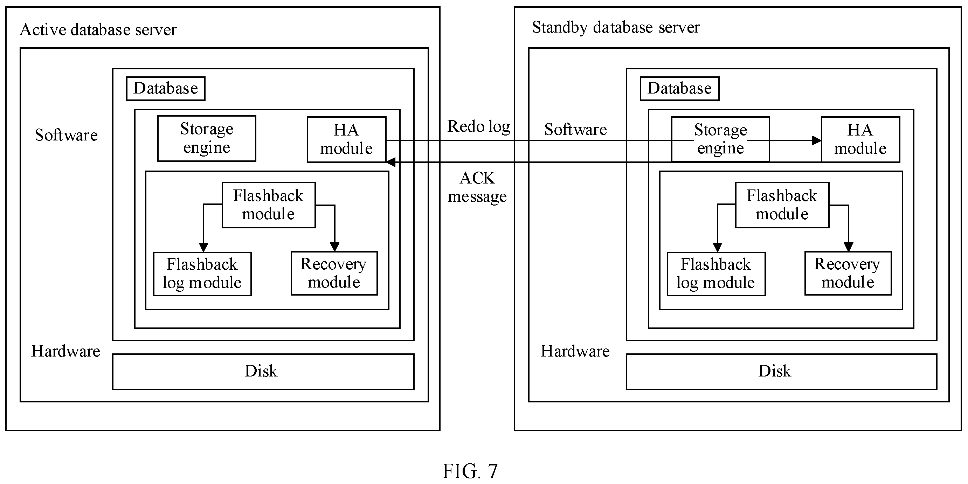

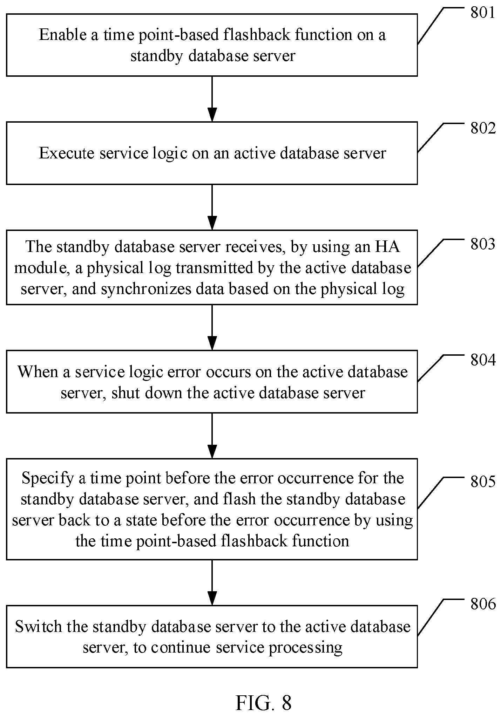

The following describes, with reference to FIG. 7 and FIG. 8, an application of the time point-based flashback function in an active/standby dual-server misoperation recovery scenario. In this scenario, if an erroneous logical operation occurs in the database, the database can be quickly flashed back to a state at a specified moment. The embodiment shown in FIG. 8 may be applied to a system architecture shown in FIG. 7. The following first describes the system architecture shown in FIG. 7.

As shown in FIG. 7, the database system includes two database servers: an active database server and a standby database server. The active database server is configured to execute database services, and the standby database server is used as a disaster recovery backup for the active database server. Compared with the system architecture shown in FIG. 1, in the database system shown in FIG. 7, a high availability (high availability, HA) module is added to the active database server and the standby database server. The HA module can transmit a redo log and an acknowledge character (acknowledge character, ACK) message to ensure consistency between the active and standby servers. The other modules of the database system shown in FIG. 7 are similar to those of the system architecture shown in FIG. 1. Details are not described herein again.

The following describes, with reference to FIG. 8, an application of the time point-based flashback function in an active/standby dual-server misoperation recovery scenario. As shown in FIG. 8, this embodiment includes steps 801 to 806.

801. To minimize impact on services on an active database server, enable the time point-based flashback function on a standby database server. Certainly, the time point-based flashback function may also be enabled on both the active and standby servers. This is not specifically limited herein.

802. Execute service logic on the active database server.

803. The standby database server receives, by using an HA module, a redo log transmitted by the active database server, and synchronizes data based on the redo log.

804. When a service logic error occurs on the active database server, shut down the active database server.

805. Specify a time point before the error occurrence for the standby database server, and flash the standby database server back to a state before the error occurrence by using the time point-based flashback function.

806. Switch the standby database server to the active database server, to continue service processing, thereby ensuring service continuity.

The foregoing describes embodiments of this application from a perspective of methods. The following describes a related device in embodiments of this application from a perspective of specific apparatus implementation.

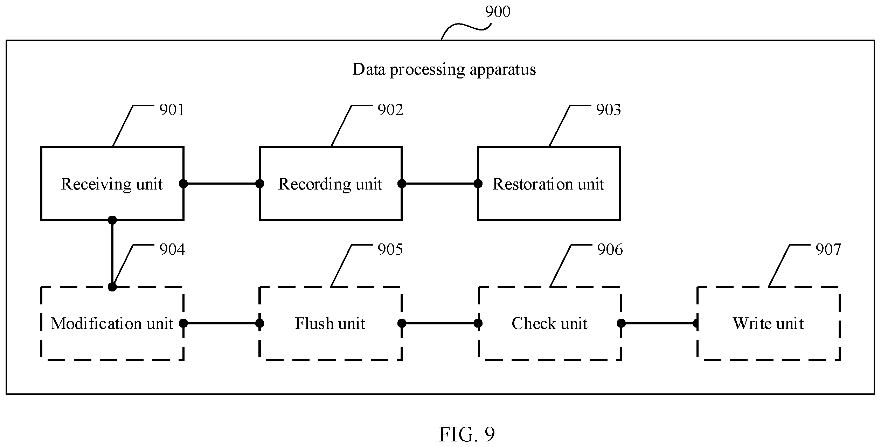

Referring to FIG. 9, an embodiment of this application provides a diagram of a data processing apparatus 900. The data processing apparatus 900 includes a receiving unit 901, a recording unit 902, and a restoration unit 903.

The receiving unit 901 is configured to receive a first flashback instruction.

The recording unit 902 is configured to: in response to the first flashback instruction, record a first page in a database into a flashback log before the first page is modified for a first time in a target period.

The receiving unit 901 is further configured to receive a second flashback instruction.

The restoration unit 903 is configured to: in response to the second flashback instruction, restore the database to a state at a specified moment based on the flashback log and a redo log of the database.

Optionally, the target period is a checkpoint period in which the first page is modified for the first time after the first flashback instruction is received.

Optionally, the target period is a single checkpoint period, and the flashback log includes a plurality of first pages, where each of the first pages corresponds to one checkpoint period.

Optionally, the target period includes N checkpoint periods, and the flashback log includes a plurality of first pages, where each of the first pages corresponds to the N checkpoint periods, and N is an integer greater than 1.

Optionally, the restoration unit 903 is specifically configured to: construct a fast lookup structure in an index structure manner based on the plurality of first pages; determine, based on the fast lookup structure, a target page corresponding to the specified moment in the plurality of first pages; and restore the database to the state at the specified moment based on the target page and the redo log.

Optionally, the recording unit 902 is further configured to: record a log between a recovery point and a least recovery point in the redo log into the flashback log.

Optionally, the data processing apparatus 900 further includes a modification unit 904, configured to modify the first page to obtain a second page; and a flush unit 905, configured to flush the second page to a disk.

Optionally, the recording unit 902 is specifically configured to: copy the page to a flashback buffer; and record the page from the flashback buffer into the flashback log; and the data processing apparatus 900 further includes: a check unit 906, configured to check whether the first page exists in the flashback buffer; and a write unit 907, configured to: if the first page exists, write the first page from the flashback buffer to the flashback log.

Optionally, modifying the first page and recording the first page into the flashback log are parallel operations.

The modules in the data processing apparatus 900 perform operations of the data processing apparatus in the embodiments shown in FIG. 2 to FIG. 6 and FIG. 8. Details are not described herein again.

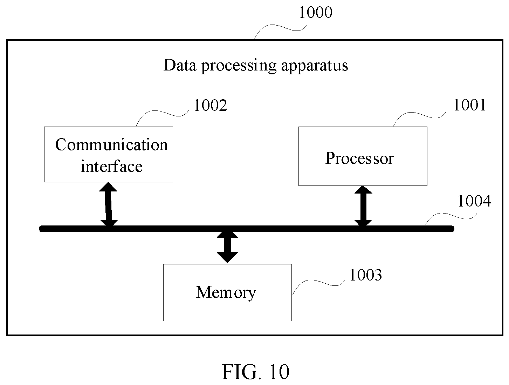

FIG. 10 is a diagram of a possible structure of a data processing apparatus 1000 according to an embodiment of this application. The data processing apparatus 1000 includes a processor 1001, a communication interface 1002, a memory 1003, and a bus 1004. The processor 1001, the communication interface 1002, and the memory 1003 are connected to each other through the bus 1004. In this embodiment of this application, the processor 1001 is configured to control and manage an action of the data processing apparatus. For example, the processor 1001 is configured to perform the steps performed by the data processing apparatus in the method embodiment shown in FIG. 3. The communication interface 1002 is configured to support the data processing apparatus in performing communication. The memory 1003 is configured to store program code and data of the data processing apparatus.

The processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 1004 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 10, but this does not mean that there is only one bus or only one type of bus.

An embodiment of this application further provides a computer-readable storage medium. The computer-readable storage medium includes instructions. When the instructions are run on a computer, the computer is enabled to perform the methods in the embodiments shown in FIG. 2 to FIG. 6 and FIG. 8.

An embodiment of this application further provides a computer program product including instructions. When the computer program product runs on a computer, the computer is enabled to perform the methods in the embodiments shown in FIG. 2 to FIG. 6 and FIG. 8.

An embodiment of this application further provides a chip system. The chip system includes at least one processor and a communication interface. The communication interface and the at least one processor are interconnected through a line, and the at least one processor is configured to run a computer program or instructions, to perform the methods in the embodiments shown in FIG. 2 to FIG. 6 and FIG. 8.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to an existing technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data processing method, comprising:
receiving a first flashback instruction;
in response to the first flashback instruction, recording a first page in a database into a flashback log before modifying the first page for a first time in a target period;
receiving a second flashback instruction; and
in response to the second flashback instruction, restoring the database to a state at a specified moment based on the flashback log and a redo log of the database.

2. The method according to claim 1, wherein the target period is a checkpoint period in which the first page is modified for the first time after the first flashback instruction is received.

3. The method according to claim 1, wherein the target period is a single checkpoint period, and the flashback log comprises a plurality of first pages, wherein each of the first pages corresponds to one checkpoint period.

4. The method according to claim 1, wherein the target period comprises N checkpoint periods, and the flashback log comprises a plurality of first pages, wherein each of the first pages corresponds to the N checkpoint periods, and N is an integer greater than 1.

5. The method according to claim 3 or 4, wherein the restoring the database to the state at the specified moment based on the flashback log and the redo log of the database comprises:
constructing a fast lookup structure in an index structure manner based on the plurality of first pages;
determining, based on the fast lookup structure, a target page corresponding to the specified moment in the plurality of first pages; and
restoring the database to the state at the specified moment based on the target page and the redo log.

6. The method according to any one of claims 1 to 5, wherein after the receiving the first flashback instruction, the method further comprises:
recording a log between a recovery point and a least recovery point in the redo log into the flashback log.

7. The method according to any one of claims 1 to 6, wherein the method further comprises:
modifying the first page to obtain a second page; and
flushing the second page to a disk.

8. The method according to claim 7, wherein the recording the page into the flashback log comprises:
copying the page to a flashback buffer; and
recording the page from the flashback buffer into the flashback log; and
before the flushing the second page to the disk, the method further comprises:
checking whether the first page exists in the flashback buffer; and
if the first page exists, writing the first page from the flashback buffer to the flashback log.

9. The method according to any one of claims 1 to 8, wherein modifying the first page and recording the first page into the flashback log are parallel operations.

10. A data processing apparatus, comprising:
a receiving unit, configured to receive a first flashback instruction;
a recording unit, configured to: in response to the first flashback instruction, record a first page in a database into a flashback log before modifying the first page for a first time in a target period; wherein
the receiving unit is further configured to receive a second flashback instruction; and
a restoration unit, configured to: in response to the second flashback instruction, restore the database to a state at a specified moment based on the flashback log and a redo log of the database.

11. The apparatus according to claim 10, wherein the target period is a checkpoint period in which the first page is modified for the first time after the first flashback instruction is received.

12. The apparatus according to claim 10, wherein the target period is a single checkpoint period, and the flashback log comprises a plurality of first pages, wherein each of the first pages corresponds to one checkpoint period.

13. The apparatus according to claim 10, wherein the target period comprises N checkpoint periods, and the flashback log comprises a plurality of first pages, wherein each of the first pages corresponds to the N checkpoint periods, and N is an integer greater than 1.

14. The apparatus according to claim 12 or 13, wherein the restoration unit is specifically configured to:
construct a fast lookup structure in an index structure manner based on the plurality of first pages;
determine, based on the fast lookup structure, a target page corresponding to the specified moment in the plurality of first pages; and
restore the database to the state at the specified moment based on the target page and the redo log.

15. The apparatus according to any one of claims 10 to 14, wherein the recording unit is further configured to:
record a log between a recovery point and a least recovery point in the redo log into the flashback log.

16. The apparatus according to any one of claims 10 to 15, wherein the apparatus further comprises:
a modification unit, configured to modify the first page to obtain a second page; and
a flush unit, configured to flush the second page to a disk.

17. The apparatus according to claim 16, wherein the recording unit is specifically configured to:
copy the page to a flashback buffer; and
record the page from the flashback buffer into the flashback log; and
the apparatus further comprises:
a check unit, configured to check whether the first page exists in the flashback buffer; and
a write unit, configured to: if the first page exists, write the first page from the flashback buffer to the flashback log.

18. The apparatus according to any one of claims 10 to 17, wherein modifying the first page and recording the first page into the flashback log are parallel operations.

19. A data processing apparatus, comprising a processor and a memory, wherein
the memory is configured to store instructions; and
the processor is configured to execute the instructions stored in the memory, to implement the method according to any one of claims 1 to 9.

20. A computer-readable storage medium, storing a computer program thereon, wherein when executed by one or more processors, the computer program implements the method according to any one of claims 1 to 9.

21. A computer program product comprising instructions, wherein when the computer program product is run on a computer, the computer is enabled to perform the method according to any one of claims 1 to 9.
